# FASCICULE DE BREVET EUROPEEN

(11) **EP 0 616 922 B1**
(45) Date de publication et mention de la délivrance du brevet: **17.09.1997**
(21) Numéro de dépôt: 94400644.4
(22) Date de dépôt: 25.03.1994
(51) Int. Cl.: B60Q 3/04, G09F 13/18, G02B 5/32, G01D 11/28, G01D 13/22

(54) **Système indicateur notamment pour tableau de bord de véhicule automobile comportant un hologramme**
Anzeigesystem mit Hologramm, insbesondere zum Gebrauch bei Autoarmaturenbrettern
Indicating system, mainly for car dashboard displays, incorporating a hologram

(30) Priorité: 25.03.1993 FR 9303445; 25.03.1993 FR 9303446
(43) Date de publication de la demande: 28.09.1994
(73) Titulaire: MAGNETI MARELLI FRANCE, 92000 Nanterre (FR)
(72) Inventeur: Bezard, Jean-Jacques, F-78400 Chatou (FR); Jury, Catherine, F-92500 Rueil-Malmaison (FR)
(74) Mandataire: Martin, Jean-Jacques

(56) Documents cités:
- EP-A- 0 006 361
- DE-A- 3 425 029
- FR-A- 2 699 273
- GB-A- 2 255 181
- JP-A-63 194 201
- US-A- 4 984 872
- US-A- 4 988 152
- US-A- 5 046 793
- PATENT ABSTRACTS OF JAPAN vol. 17, no. 139 (M-1385) 22 Mars 1993 & JP-A-04 317 827 (YAZAKI CORP.) 9 Novembre 1992
- PATENT ABSTRACTS OF JAPAN vol. 15, no. 468 (M-1184) 27 Décembre 1992 & JP-A-03 200 426 (NIPPON SEIKI CO. LTD)

## Description

La présente invention concerne le domaine des systèmes indicateurs comprenant une pièce optique formant guide de lumière.

La présente invention concerne en particulier le domaine des tableaux de bord pour véhicules automobiles.

Généralement les tableaux de bord pour véhicules automobiles comprennent un boîtier, des appareils indicateurs comportant chacun un moyen d'entraînement, par exemple un logomètre ou un moteur pas à pas, et une aiguille, un cadran comportant des plages translucides définissant des échelles de graduation en regard desquelles se déplacent les aiguilles, au moins une source lumineuse et au moins une pièce optique qui sert de guide de lumière pour acheminer la lumière de la source vers le cadran. Une telle pièce optique servant de guide de lumière assure une double fonction : d'une part l'éclairage des plages translucides prévues sur le cadran, d'autre part l'éclairage des aiguilles. La pièce optique peut aussi servir de support aux appareils indicateurs.

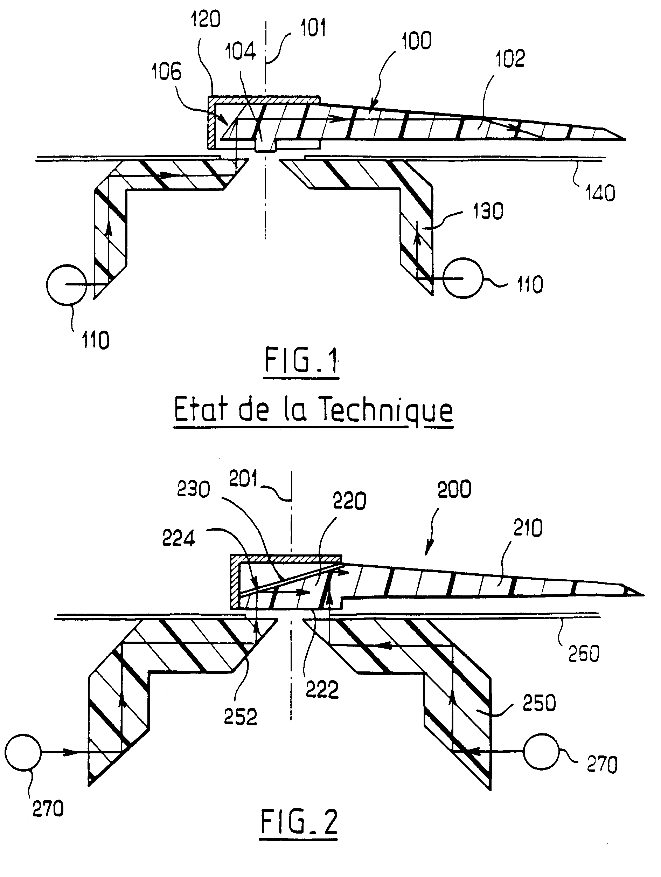

Sur la figure 1 annexée qui illustre une structure conforme à l'état de la technique, on a référencé 110 les sources lumineuses, 130 une pièce optique servant de guide de lumière, et 140 un cadran.

Les pièces optiques formant guide de lumière pour système indicateur ont déjà fait l'objet de nombreux modes de réalisation.

On a notamment proposé des pièces optiques formant guide de lumière constituées d'une pièce plane associée à différentes sources lumineuses situées dans leur épaisseur ou sur leur tranche comme décrit par exemple dans les documents FR-A-2422147, FR-A-2418503, DE-GM-6935892, US-A-2831453, US-A-2900949 et US-A-2507035. Généralement, ces pièces optiques sont pourvues de couches optiquement réflectrices sur leur tranche ainsi que, le cas échéant, sur une partie de leurs surfaces principales.

On a également proposé, comme décrit dans le document GB-A-2185576 de réaliser ces pièces optiques formant guide de lumière sous forme d'une plaque généralement plane pourvue de structures en saillie sur leur face arrière, en regard de sources lumineuses. Ces structures en saillie récupèrent la lumière issue des sources lumineuses et dirigent celles-ci vers les zones d'exploitation, par effet de guide de lumière, dans l'épaisseur de la plaque.

De nos jours, dans les tableaux de bord pour véhicules automobiles, les pièces optiques formant guide de lumière comprennent généralement des structures à effet de prisme en saillie sur leur face arrière, comme on l'a schématisé sur la figure 1 annexée.

Ces systèmes indicateurs connus ne donnent cependant pas totalement satisfaction.

En particulier, l'homogénéité de l'éclairage des zones d'exploitation, notamment des plages translucides dans le cadran, n'est pas toujours régulière.

Par ailleurs, le rendement optique des pièces formant guide de lumière, jusqu'ici proposées, est le plus souvent médiocre.

En outre de nos jours, les aiguilles utilisées dans les tableaux de bord de véhicules automobiles sont généralement du type aiguilles éclairantes.

L'utilisation d'aiguilles éclairantes a pour fonction essentielle de faciliter l'observation des appareils indicateurs la nuit, ou d'une façon plus générale, lorsque la lumière ambiante est déficiente.

Les aiguilles indicatrices sont généralement formées d'un moyeu destiné à être chassé sur un arbre de commande et supportant un corps d'aiguille allongé.

On connaît deux types principaux d'aiguilles indicatrices.

Les aiguilles du premier type peuvent être réalisées en un matériau opaque sur le plan optique. Elles sont pourvues, sur la surface avant visible, d'un revêtement coloré et sont associées à des sources lumineuses placées sur l'avant pour éclairer le revêtement en cas d'éclairage ambiant insuffisant.

Ces aiguilles ont déjà rendu de grands services. Cependant, elles apparaissent peu lumineuses par comparaison avec les aiguilles dites éclairantes. De ce fait, elles ne donnent pas entière satisfaction quant à l'esthétique, l'agréement et la fiabilité de l'observation.

Les aiguilles du second type, dites éclairantes, sont formées pour l'essentiel, comme représenté schématiquement sur la figure 1 d'un matériau transparent sur le plan optique et sont associées à des sources lumineuses placées latéralement ou sur l'arrière de l'aiguille pour injecter la lumière dans le corps de l'aiguille qui sert de guide de lumière.

Les aiguilles dites éclairantes sont préférées de nos jours aux aiguilles du premier type précité.

Plus précisément, comme schématisé sur la figure 1, les aiguilles 100 dites éclairantes comprennent généralement un index 102 effilé en matériau optiquement transparent et un moyeu 104 centré sur l'axe 101 de sortie d'un moyen d'entraînement, par exemple un logomètre. Le moyeu 104 est adapté pour être engagé par tout moyen approprié sur ledit axe de sortie du moyen d'entraînement.

Les aiguilles éclairantes connues 100 comprennent également des moyens optiques, au niveau du moyeu 104, adaptés pour diriger vers l'index 102 une partie importante des rayons lumineux reçus en provenance de sources lumineuses 110, avec une incidence générale parallèle à l'axe 101. Généralement, les moyens optiques précités sont formés de prismes 106 définis au niveau du moyeu 104, par l'interface entre le matériau de l'aiguille 100 et l'air. De façon connue en soi, l'inclinaison de ces interfaces 106 par rapport à l'axe 101 doit être supérieure à l'angle limite de réfraction. Cette inclinaison est typiquement de l'ordre de 45°.

De façon connue en soi, les aiguilles dites éclairantes 100 comprennent également un chapeau 120 d'habillage recouvrant les moyens optiques 106 précités pour parfaire l'esthétique de l'ensemble de l'aiguille.

On trouvera par exemple un descriptif plus précis d'une aiguille éclairante connue associée à une pièce optique formant guide de lumière dans les documents EP-A-0295165 et DE-A-3425029.

Différents documents se sont préoccupés de l'utilisation de moyens holographiques sur des véhicules automobiles. Cependant, aucun de ces documents n'enseigne ni ne suggère les caractéristiques de la présente invention.

Par exemple, le document US-4988152 concerne un miroir pour pare-brise de véhicule. Un tel document est très éloigné du domaine des tableaux de bord de véhicules automobiles, en particulier des dispositifs indicateurs à aiguille, ou pièce optique servant de guide de lumière dans de tels tableaux.

Le document JP-A-04 317 827 propose d'utiliser un hologramme pour former l'image des informations (graduations ou équivalents) d'un cadran. Ce document n'enseigne aucunement d'utiliser un tel hologramme pour acheminer la lumière entre une source lumineuse et un point final d'utilisation.

Le document JP-A-03 037 520, propose de symboliser une aiguille à l'aide d'un hologramme et non point une aiguille équipée d'un hologramme, pour l'acheminement de la lumière d'éclairage, comme c'est le cas dans le cadre de l'invention.

Le document US-A-4984872 décrit un dispositif d'affichage grand angle pour avion comprenant un collimateur formé d'un élément holographique plan intercalé entre une couche source lumineuse et un panneau afficheur à cristaux liquides.

La présente invention a maintenant pour but de perfectionner les moyens optiques utilisés sur les tableaux de bord de véhicules automobiles, tout particulièrement les pièces optiques formant guide de lumière et/ou les moyens optiques prévus sur les aiguilles éclairantes.

Ce but est atteint dans le cadre de la présente invention grâce à un système indicateur, notamment pour tableau de bord de véhicule automobile, tel que défini en revendication 1 annexée délimiteé sous forme de préambule et de partie caractérisante par rapport au document US-A-4 984 872, comprenant:
- au moins une source lumineuse, et
- des moyens optiques qui servent à acheminer la lumière de la source lumineuse vers un élément indicateur, et
   comprennent au moins un hologramme, caractérisé par le fait que l'élément indicateur comprend une aiguille indicatrice du type comportant un index effilé en matériau optiquement transparent, un moyeu par lequel l'aiguille peut être fixée sur l'axe de sortie d'un moyen d'entraînement et des moyens optiques prévus au niveau du moyeu et adaptés pour renvoyer vers l'index des rayons lumineux arrivant sur le moyeu avec une incidence sensiblement parallèle à l'axe de celui-ci,
   les moyens optiques prévus sur le moyeu de l'aiguille comprennant au moins un hologramme qui couvre la majeure partie de la surface du moyeu transversale à son axe.

Selon une autre caractéristique avantageuse de la présente invention, l'hologramme définit un miroir holographique.

Selon une autre caractéristique avantageuse de la présente invention, l'hologramme est disposé sensiblement perpendiculairement à l'axe du moyeu.

Selon une autre caractéristique avantageuse de la présente invention, il est prévu en outre des moyens optiques de correction au niveau de la base de l'index servant de jonction entre l'index et le moyeu.

Selon une autre caractéristique avantageuse de la présente invention, les moyens optiques de correction précités sont formés d'une lentille holographique.

Selon une autre caractéristique avantageuse de la présente invention, le dispositif indicateur comprend en outre une pièce optique adaptée pour diriger un faisceau optique issu d'au moins une source lumineuse, vers la majeure partie de la surface du moyeu de l'aiguille.

Selon une autre caractéristique avantageuse de l'invention:
- les moyens optiques comprennent au moins une pièce optique qui sert de guide de lumière pour acheminer la lumière de la source lumineuse vers un élément indicateur, telle qu'une aiguille ou une plage translucide formée dans un cadran,
   et ladite pièce optique comprend en outre au moins un hologramme.

Comme on le comprendra à la lecture de la suite de la description, dans le cadre de la présente invention, on peut utiliser tout type d'hologramme, que celui-ci soit obtenu par enregistrement optique des interférences entre un faisceau de référence et un faisceau objet, ou encore par calcul sous forme d'un hologramme de synthèse.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 précédemment décrite représente schématiquement un dispositif indicateur comportant une aiguille éclairante conforme à l'état de la technique,
- la figure 2 représente une vue schématique en coupe axiale d'un dispositif indicateur aiguille conforme à la présente invention,
- les figures 3 et 4 représentent selon des vues schématiques en coupe axiale deux variantes de réalisation d'indicateurs à aiguille conformes à la présente invention,
- les figures 5 et 6 représentent deux vues schématiques orthogonales entre elles d'une autre application conforme à la présente invention, concernant une aiguille qui comporte un index susceptible de rotation autour d'un axe longitudinal,
- la figure 7 représente une vue schématique en coupe verticale d'un système indicateur conforme à un premier mode de réalisation de la présente invention, comportant une pièce optique à hologramme,
- la figure 8 représente une vue schématique en coupe verticale d'un système indicateur conforme à un second mode de réalisation de la présente invention, comportant une pièce optique à hologramme,
- la figure 9 représente une autre vue schématique en coupe verticale partielle d'un système indicateur conforme à une troisième variante de réalisation de la présente invention, comportant une pièce optique à hologramme, et
- la figure 10 représente une variante de disposition d'une source lumineuse par rapport à une pièce optique.

On va tout d'abord décrire l'application de la présente invention à des appareils indicateurs à aiguille éclairante, en regard des figures 2 à 6 annexées.

Plus précisément, sur la figure 2, on a représenté, selon une vue en coupe axiale, une aiguille indicatrice 200 conforme à la présente invention, ainsi qu'une pièce optique formant guide de lumière 250 associée à un cadran 260.

Sur la figure 2, on a omis, pour simplifier l'illustration, le moyen d'entraînement de l'aiguille 200. On rappelle en effet que ce moyen d'entraînement peut être constitué de toute structure adéquate connue de l'homme de l'art, en particulier d'un logomètre, ou encore d'un moteur pas à pas, d'un galvanomètre ou d'un appareil thermique, tel qu'un appareil à bilame.

L'aiguille 200 représentée sur la figure 2 comprend, sous forme d'une pièce unique, un index 210 et un moyeu 220.

L'index 210 et le moyeu 220 monobloc de l'aiguille 200 sont réalisés en matériau optiquement transparent, par exemple en polymétacrylate de méthyle ou polycarbonate.

L'index 210 peut être identique aux index 102 des aiguilles 100 antérieures connues.

Le moyeu 220 comprend des moyens permettant de fixer l'aiguille sur l'arbre de sortie du moteur d'entraînement. De tels moyens de fixation peuvent faire l'objet de nombreuses variantes de réalisation.

Ces moyens de fixation peuvent être constitués d'un simple alésage borgne formé dans le moyeu 220, et centré sur un axe 201.

Selon une variante avantageuse, l'aiguille est fixée sur l'arbre de sortie du moteur d'entraînement grâce à des moyens d'indexage du type décrit dans le document EP-A-0249511.

La pièce optique 250 est conçue pour diriger la lumière reçue d'au moins une source lumineuse 270, vers le moyeu 220, de sorte que la lumière arrive sur le moyeu 220 avec une incidence parallèle à l'axe 201.

La pièce 250 peut faire l'objet de diverses variantes de réalisation connues de l'homme de l'art. La pièce optique 250 peut par exemple être conforme à l'enseignement du document EP-A-0295165. Pour cette raison, la pièce optique 250 ne sera pas décrite dans le détail par la suite.

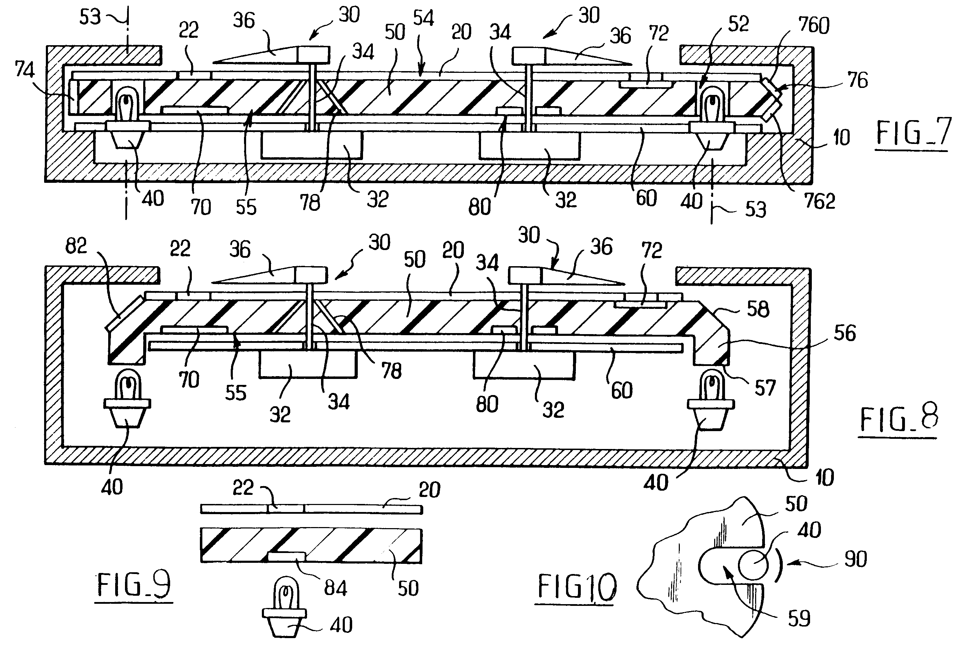

Comme on le décrira par la suite en regard des figures 7 à 10, en variante, selon l'invention, la pièce optique 250 peut comprendre un hologramme.

On notera que dans le cadre de la présente invention, la pièce optique 250 est adaptée pour diriger la lumière non pas sur une zone limitée du moyeu 220 de l'aiguille, mais sur la quasi-totalité de la surface de ce moyeu 220 transversale à l'axe 201.

Plus précisément encore dans le cadre de la présente invention, la pièce optique 250 peut être adaptée pour diriger le flux lumineux sur toute la surface du moyeu 220 transversale à l'axe 201, à la seule exception des moyens de fixation sur l'arbre de sortie du moteur d'entraînement.

La pièce optique 250 possède typiquement à cet effet un tronc de cône 252 centré sur l'axe 201, ou un ensemble de facettes équivalentes réparties autour de l'axe 201 et travaillant par effet de prisme.

La face d'entrée 222 du moyeu 220, adjacente à la pièce 250 s'étend de préférence essentiellement perpendiculairement à l'axe 201.

En outre, selon une caractéristique essentielle de l'invention, la surface supérieure 224 du moyeu 220 reçoit un composant holographique 230 adapté pour diriger vers l'index 210 la lumière reçue de la pièce optique 250 avec une incidence parallèle à l'axe 201. L'hologramme 230 constitue ainsi de préférence un miroir holographique.

L'hologramme 230 formant réflecteur peut être réalisé à l'aide de tout moyen adéquat connu de l'homme de l'art.

L'homme de l'art sait par exemple confectionner des miroirs holographiques en disposant une couche photosensible, telle qu'une couche de gélatine bichromatée, sur un substrat transparent plan, parallèlement à un miroir, et en exposant cette couche photosensible sur toute sa surface, à un faisceau laser étendu dans ses deux dimensions pour lui donner la section voulue. La lumière laser traverse une première fois la couche photosensible et le substrat en constituant ainsi une onde de référence. La lumière réfléchie par la surface du miroir sous-jacent traverse à nouveau la pellicule en tant qu'onde objet et forme dans la couche photosensible les plans d'interférence souhaités pour générer l'effet de réflexion.

Il suffit alors de placer la couche 230 obtenue, formant hologramme, sur la face supérieure 224 du moyeu 220.

Selon une autre variante, le miroir holographique peut être formé d'un hologramme en relief, en ménageant dans la surface du moule utilisé pour la réalisation de l'aiguille 200 des structures adéquates.

Il suffit pour cela de réaliser une empreinte de l'hologramme de synthèse obtenu par calcul et de placer cette empreinte dans le moule.

En variante, l'hologramme en relief peut également être réalisé par pressage à l'aide de ladite empreinte.

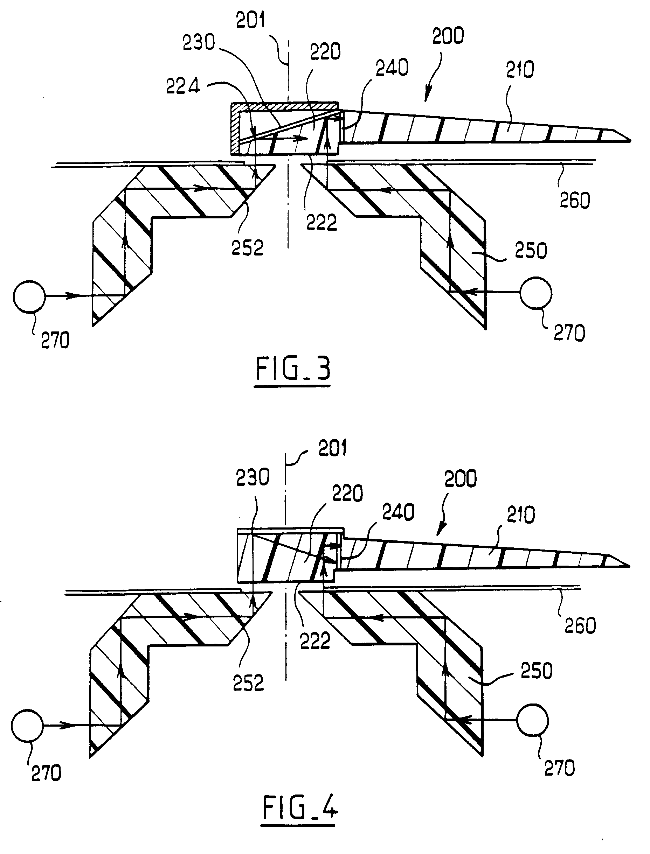

On a représenté sur la figure 3, une variante de réalisation d'aiguille éclairante conforme à la présente invention qui reprend les caractéristiques précitées en regard de la figure 2 et qui comprend en outre des moyens de correction formés d'une lentille holographique 240 placée à la base de l'index 210. La lentille holographique 240 s'étend transversalement à l'index. Elle est placée au niveau de la zone de jonction entre l'index 210 et le moyeu 220. Une telle lentille holographique 240 peut être formée selon tout moyen connu de l'homme de l'art. De préférence, la lentille holographique 240 est intégrée dans l'aiguille 200, au moment du processus de fabrication de celle-ci. A cet effet, de préférence, la lentille holographique 240 est placée dans le moule de fabrication de l'aiguille, avant injection de la matière thermoplastique composant celle-ci.

Là encore, la lentille holographique peut soit être obtenue par enregistrement optique des interférences entre un faisceau de référence et un faisceau objet, soit être obtenue par calcul sous forme d'un hologramme de synthèse, notamment sous forme d'un hologramme en relief.

Une telle lentille de correction 240 a pour fonction d'opérer une répartition uniforme, dans l'index 210, des rayons renvoyés par l'hologramme 230 de sorte que la luminosité de l'index 210 soit homogène sur toute sa longueur.

Les moyens de corrections 240 sont formés de préférence d'une lentille holographique. Toutefois en variante ces moyens de correction peuvent être formés d'un composant optique classique.

On a représenté sur la figure 4 annexée, une autre variante de réalisation d'aiguille éclairante conforme à la présente invention.

On retrouve sur cette variante de réalisation de la figure 4, une aiguille éclairante 200 comprenant un index 210 solidaire d'un moyeu 220, éclairée à l'aide d'une pièce optique 250.

La variante de réalisation représentée sur la figure 4 se distingue essentiellement de celle décrite précédemment en regard de la figure 2 par le fait que l'hologramme 230 placé sur le moyeu 220, selon la figure 4, ne constitue pas uniquement un miroir holographique apte à renvoyer la lumière issue du guide 250 vers l'index 210, mais assure pour une part une telle fonction de réflexion en direction de l'index 210, et pour une autre part une fonction de diffusion au niveau du moyeu 220, de sorte que l'aiguille 200 apparaisse éclairée sur toute sa longueur, y compris au niveau du moyeu 220, et non pas seulement au niveau de l'index 210.

L'un des intérêts majeurs de la présente invention par rapport aux aiguilles éclairantes antérieures connues, est de permettre un gain de puissance dans l'éclairage de l'index 210.

En effet, l'utilisation de surfaces de réflexion travaillant par effet de prisme selon l'état de la technique, exigeait, compte-tenu de l'encombrement axial limité des aiguilles, une surface de réflexion limitée et dans tous les cas de figure nettement inférieure à la surface transversale totale du moyeu 220. En revanche, dans le cadre de la présente invention, on peut aisément placer un hologramme 230 sur la quasi-totalité de ce moyeu, d'où gain de puissance au niveau de l'éclairage de l'aiguille. Plus précisément dans le cadre de la présente invention, l'hologramme 230 peut couvrir la totalité de la surface transversale du moyeu 220, à la seule exception de la surface de ce moyeu attribuée aux moyens de fixation de celui-ci sur l'axe de sortie du moyen d'entrainement.

Les hologrammes utilisés dans le cadre de la présente invention peuvent constituer en particulier des miroirs ou lentilles holographiques à puissance optique différente de 1.

La disposition de l'hologramme 230 sur le moyeu 220 peut faire l'objet de nombreuses variantes.

On peut ainsi placer l'hologramme 230 sur la face supérieure 224 du moyeu 220, sur la face inférieure 222 du moyeu 220, dans l'épaisseur de celui-ci ou encore sur sa surface périphérique centrée sur l'axe 201.

L'hologramme 230 peut également présenter des orientations diverses par rapport à l'axe 201. Il peut en particulier être perpendiculaire à cet axe 201 ou incliné sur celui-ci.

L'hologramme 230 peut également être plan ou non.

En outre, la présente invention n'est pas limitée aux aiguilles dans lesquelles l'index 210 est solidaire du moyeu 220 et forme une pièce unique avec celui-ci.

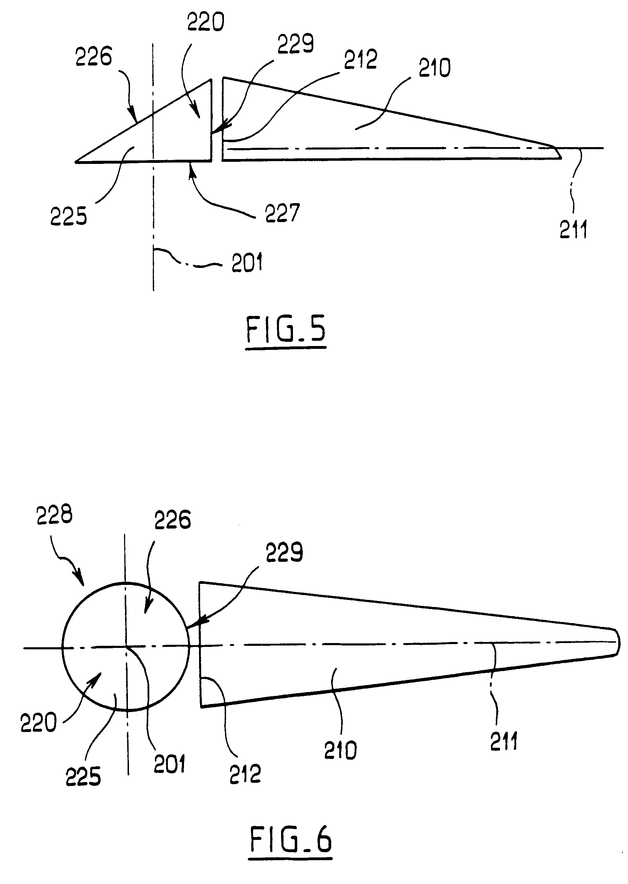

La présente invention s'applique en particulier également aux aiguilles du type défini dans le document FR-A-2 699 273 et comprenant, comme schématisé sur les figures 5 et 6, un index 210 indépendant du moyeu 220. Le moyeu 220 est centré sur un axe principal 201 transversal à l'axe 211 de l'index 210. Le moyeu 220 est entrainé à rotation autour de l'axe principal 201 par un moyeu d'entraînement, tel qu'un logomètre ou équivalent. L'index 210 est monté et guidé à rotation sur le moyeu 220 autour de son axe longitudinal 211. Les appareils indicateurs équipés d'une telle aiguille comportent en outre des moyens d'entraînement contrôlé de l'index 210 autour de son axe longitudinal.

On a ainsi schématisé sur les figures 5 et 6 annexées la pièce optiquement transparente composant l'index 210 et une pièce optique 225 placée sur le moyeu 220.

Dans le cadre de la présente invention une telle aiguille peut être munie d'au moins un hologramme placé par exemple sur la face supérieure 226 de la pièce 225, sur la face inférieure 227 de celle-ci, dans son épaisseur, sur sa périphérie 228, voire sur sa face 229 adjacente à l'index 210, ou encore sur la face d'entrée 212 de l'index 210 ; cet ou ce(s) hologramme(s) peut(peuvent) présenter des orientations diverses par rapport à l'axe 201 et être plan(s) ou non.

L'utilisation d'hologrammes est très avantageuse dans ce contexte car elle permet d'optimiser l'éclairage de l'index 210 malgré la présence des moyens de support à pivotement de ce dernier.

On va maintenant décrire l'application de la présente invention à des pièces optiques servant de guide de lumière, en regard des figures 7 à 10 annexées.

On va tout d'abord décrire la première variante de réalisation conforme à la présente invention représentée sur la figure 7 annexée.

On a schématisé sur la figure 7 annexée un tableau de bord de véhicule automobile conforme à la présente invention comprenant un boîtier 10, un cadran 20, deux appareils indicateurs à aiguille 30, deux sources lumineuses 40 et une pièce optique formant guide de lumière 50.

Le boîtier 10 est réalisé avantageusement en matériau opaque, par exemple blanc. De préférence, le boîtier 10 est réalisé par moulage en matière plastique. Bien entendu, le boîtier 10 peut être formé par assemblage de différentes pièces séparées.

Le cadran 20 est formé avantageusement d'une plaque possédant des zones 22 translucides. Les zones 22 translucides peuvent constituer par exemple, des échelles de graduation en regard desquelles se déplacent les aiguilles des appareils indicateurs 30. Les plages translucides 22 peuvent également former des symboles utiles pour identifier les informations mises à disposition de l'utilisateur. Enfin, les plages translucides 22 peuvent couvrir la majeure partie du cadran 20 et définir par exemple un fond continu coloré pour le tableau de bord afin d'améliorer l'esthétique de celui-ci et/ou l'accessibilité des informations délivrées.

En pratique, le cadran 20 peut être formé par sérigraphie sur une feuille initiale optiquement transparente ou translucide. La réalisation d'un tel cadran 20 est bien connue dans le domaine des tableaux de bord de véhicules automobiles. La technique d'obtention d'un tel cadran 20 ne sera donc pas décrite plus en détail par la suite.

Chaque appareil indicateur 30 comprend un moyen d'entraînement 32, tel qu'un logomètre, un moteur pas à pas, un galvanomètre, ou un appareil thermique, tel qu'un appareil à bilame, dont l'arbre de sortie 34 porte une aiguille indicatrice 36. Le cas échéant, cette aiguille 36 peut être munie d'un capuchon d'habillage connu en lui méme et qui ne sera donc pas décrit par la suite.

De préférence comme indiqué précédemment, l'aiguille indicatrice 36 est formée en un matériau optiquement transparent. De plus, les aiguilles 36 comportent de préférence, en particulier au niveau de leur moyeu, des moyens optiques aptes à diriger vers l'index de l'aiguille de la lumière provenant de la pièce optique 50, de sorte que ladite aiguille apparaisse sous un aspect lumineux. De telles aiguilles en matériau optiquement transparent éclairées par une pièce optique sont bien connues de l'homme de l'art. On peut se référer sur ce point par exemple au document EP-A-0295165. Pour cette raison, la structure des aiguilles 36 ne sera pas décrite plus en détail par la suite. On rappelle que de telles aiguilles optiquementtransparentes éclairées par une pièce optique 50 facilitent l'acquisition des informations délivrées, en particulier lorsque l'éclairage ambiant est faible ou déficient, notamment la nuit.

Le cas échéant, l'aiguille 36 peut être munie également d'au moins un hologramme comme indiqué précédemment en regard des figures 2 à 6.

Comme on le voit sur la figure 7, le cadran 20 est généralement intercalé entre les aiguilles indicatrices 36 et les moyens d'entraînement 32. Pour faciliter l'assemblage du système, et pour faciliter la maintenance, les aiguilles 36 sont de préférence assemblées sur les arbres de sortie 34 des moyens d'entraînement 32 grâce à des moyens d'indexage du type décrit dans le document EP-A-0249511.

Les sources lumineuses 40 sont supportées et alimentées par tout moyen approprié, par exemple à l'aide d'un circuit imprimé 60 servant également de support aux moyens d'entraînement 32.

La pièce optique 50 est réalisée en tout matériau optiquement transparent approprié. Il s'agit de préférence d'une matière plastique, telle que du polycarbonate ou du polymétacrylate de méthyle.

Selon le mode de réalisation préférentiel représenté sur la figure 7, la pièce optique 50 est formée d'une plaque généralement plane.

Toutefois, la pièce optique 50 peut, si nécessaire, être pourvue, en particulier sur sa face arrière, de structures en relief de faible hauteur, par exemple pour la fixation ou le positionnement des organes moteurs 32, comme décrit par exemple dans le document EP-A-236812.

La face avant de la pièce optique 50 la plus proche de l'utilisateur est référencée 54. La face arrière opposée de la pièce optique 50 est référencée 55.

Selon le mode de réalisation particulier représenté sur la figure 7, les sources lumineuses 40 sont placées dans des logements 52 formés dans l'épaisseur de la pièce optique 50. Pour éviter toute réflexion ou réfraction sur la paroi du logement 52 lors de l'entrée de la lumière dans la pièce optique 50, de préférence chaque logement 52 est formé d'un cylindre de révolution autour d'un axe 53 orthogonal aux faces principales précitées 54 et 55.

Par ailleurs, comme on l'a indiqué précédemment, selon une caractéristique essentielle de l'invention, il est prévu au moins un hologramme, sur la pièce optique 50, pour optimiser l'éclairage des zones d'exploitation, soit en l'espèce les plages translucides 22 et/ou les aiguilles 36.

On a ainsi représenté sur la figure 7 un premier hologramme 70 formé sur la face arrière 55 de la pièce optique 50 pour éclairer une plage translucide 22 du cadran 20. Cet hologramme 70 est essentiellement diffuseur/réflecteur.

On a représenté sur la figure 7, un second hologramme 72 placé sur la face avant 54 de la pièce optique 50 pour éclairer une seconde plage translucide 22. Ce second hologramme 72 est essentiellement diffuseur transmissif.

On a représenté sur la figure 7, un troisième hologramme 74 prévu sur la tranche de la pièce optique 50 pour renvoyer vers l'intérieur de celle-ci la lumière atteignant la périphérie de la pièce optique 50. Le troisième hologramme est formé d'un élément réflecteur placé essentiellement sur une partie de la tranche de la pièce optique 50 qui s'étend perpendiculairement à ces faces principales 54 et 55.

On a également représenté sur la droite de la figure 7 un quatrième hologramme 76. L'hologramme 76 assure la même fonction que le composant 74 précité. C'est-à-dire qu'il a pour fonction de renvoyer vers l'intérieur de la pièce optique 50 la lumière qui parvient sur la périphérie de la pièce optique 50. Toutefois, à la différence de l'hologramme 74 précité, l'hologramme 76 représenté sur la droite de la figure 7 est placé non pas sur une partie de tranche de la pièce optique orthogonale à ses faces principales 54, 55, mais se décompose en deux éléments 760, 762 placés respectivement sur deux portions de surface formant prisme en toit sur la pièce optique 50, inclinées chacune d'environ 45° par rapport aux faces principales 54, 55, pour former un dièdre convexe vers l'extérieur.

On a enfin représenté sur la figure 7, un cinquième hologramme 78 et un sixième hologramme 80 intégrés à la pièce optique 50 et adaptés pour permettre l'éclairage des aiguilles indicatrices 36.

Le cinquième hologramme 78 est incliné, par exemple de 45°, sur les faces principales 54, 55 de la pièce optique 50. L'hologramme 78 peut prendre la forme d'un cône de révolution centré sur l'axe d'un arbre de sortie 34 d'un mouvement d'entraînement 32. En variante, l'hologramme 78 peut s'appuyer sur des facettes équi-réparties autour de l'axe de cet arbre.

Le sixième hologramme 80 est quant à lui placé sur la face arrière 55 de la pièce optique 50. Il est adapté, tout comme l'hologramme 78 pour renvoyer vers le moyeu de l'aiguille 36 la lumière qui chemine dans l'épaisseur de la pièce optique 50.

Bien entendu, le mode de réalisation de la figure 7 peut faire l'objet de diverses variantes de réalisation.

Par exemple, pour l'éclairage des aiguilles 36, on peut prévoir des hologrammes sur la face avant 54 de la pièce optique 50 et non point sur la face arrière, de façon comparable au composant 72. De même, pour l'éclairage des plages translucides 22, on peut prévoir des hologrammes inclinés sur les faces principales 54, 55 de la pièce optique, de façon comparable à l'hologramme 78.

On a représenté sur la figure 8, un autre mode de réalisation qui diffère essentiellement du premier mode de réalisation représenté sur la figure 7, par la disposition des sources lumineuses 40, non plus sur ou dans l'épaisseur de la pièce optique 50, mais sur l'arrière de celle-ci, en regard de structures optiques 56. Plus précisément, selon le mode de réalisation représenté sur la figure 2, les sources lumineuses 40 sont placées en regard de structures 56 en saillie sur la face arrière 55 de la pièce optique 50 et venues de moulage avec celle-ci. La face d'entrée 57 desdites structures 56 est de préférence de révolution autour des sources lumineuses 40 pour éviter toute réflexion ou réfraction de lumière lors de l'entrée dans ladite pièce optique 50. Par ailleurs, la pièce optique 50 est pourvue sur sa face avant 54 et en regard desdites structures 56, de moyens optiques à effet de prisme aptes à renvoyer dans l'épaisseur de la pièce optique 50 la lumière reçue des sources 40 sensiblement perpendiculairement aux faces principales 54, 55. Comme représenté sur la droite de la figure 8, de façon classique en soi, les moyens optiques à effet de prisme peuvent être consitutés simplement de facettes 58 d'inclinaison supérieure à l'angle limite de réfraction, par exemple environ à 45° des faces principales 54, 55, en regard desdites structures 56.

Cependant, de préférence, comme représenté sur la gauche de la figure 8, les moyens optiques à effet de prisme placés en regard des structures 56 sont formées d'hologrammes réflecteurs 82.

Pour le reste, les hologrammes utilisés pour diriger la lumière vers les zones d'exploitation, à savoir les plages translucides 22 et les aiguilles 36, peuvent être conformes aux diverses dispositions décrites précédemment en regard de la figure 7.

Enfin, on a représenté sur la figure 9, une autre variante de réalisation selon laquelle, la pièce optique 50 intègre un hologramme 84 constitué d'une lentille holographique intercalée directement entre une zone d'exploitation et une source lumineuse 40. Plus précisément, selon le mode de réalisation représenté sur la figure 9, la zone d'exploitation est formée d'une plage translucide 22 dans un cadran 20. Toutefois, en variante, une lentille holographique 84 peut également être utilisée pour éclairer une aiguille indicatrice 36.

L'homme de l'art sait réaliser des hologrammes formant composants diffractifs assurant diverses fonctions, par exemple des fonctions de réflexion, des fonctions de réfraction, fonctions de diffusion ou des fonctions de lentilles ou miroirs convergents ou divergents, c'est-à-dire des miroirs ou lentilles ayant une puissance optique différente de 1.

Pour cette raison, la définition de ces hologrammes ne sera pas décrite dans le détail par la suite.

On a mentionné précédemment la possibilité de réaliser l'hologramme à l'aide d'une couche photosensible. Une telle couche sensibilisée formant hologramme peut être placée directement sur la pièce optique 50 pour assurer la fonction souhaitée.

Selon une autre variante, les différents hologrammes peuvent être formés d'hologrammes en relief, en ménageant dans la surface du moule utilisé pour la réalisation de la pièce optique 50, des structures complémentaires adéquates.

Il suffit pour cela de réaliser une empreinte de l'hologramme de synthèse obtenu par calcul et de placer cette empreinte dans le moule.

En d'autres termes, l'hologramme est alors réalisé en utilisant un réseau gravé sous forme de plaque insert pour fond de moule servant d'empreinte, sur laquelle on réalise automatiquement des hologrammes injectés lors de l'injection de matière thermoplastique dans le moule.

En variante l'hologramme en relief peut également être réalisé par pressage à l'aide de ladite empreinte.

On sait par ailleurs que les hologrammes ont généralement tendance à séparer les différentes composantes de couleur d'un faisceau issu d'une source lumineuse polychromatique. Pour éviter un tel effet, dans le cadre de la présente invention, on prévoit de préférence des moyens aptes à éviter une telle dispersion chromatique de la lumière.

Ces moyens peuvent être formés par exemple en utilisant une double structure d'hologrammes, superposés ou mis à la suite l'un de l'autre, permettant d'éviter une telle sélectivité.

Par ailleurs, dans le cadre de la présente invention, pour éviter une telle décomposition de la lumière, on peut prévoir avantageusement d'utiliser une source 40 ou 270 non pas polychromatique, mais une source monochromatique. A cet effet, les sources 40 et 270 sont formées avantageusement de diodes électroluminescentes.

Bien entendu la présente invention n'est pas limitée aux modes de réalisation particuliers qui viennent d'être décrits mais s'étend à toute variante conforme à son esprit.

En particulier, on peut prévoir de placer des hologrammes sur la totalité de la surface de la pièce optique 50, pour éclairer non pas des plages 22 localisées du cadran 20, mais toute la surface de celui-ci afin de former par exemple un fond éclairé continu pour le tableau de bord.

Les hologrammes utilisés peuvent être plans ou non.

Les hologrammes offrent l'avantage de présenter une meilleure directivité que les composants optiques classique.

Dans certaines configurations, on peut exploiter la propriété de dispersion chromatique des hologrammes, en utilisant des sources polychromatiques et en adaptant les hologrammes afin de diriger les faisceaux chromatiques séparés à la sortie de ceux-ci vers des zones d'exploitation, notamment des plages translucides, de couleur correspondante.

Par ailleurs, dans le cas d'utilisation de sources monochromatiques telles que des LED, on peut prévoir différentes sources de couleurs différentes, adaptées aux diverses zones d'exploitation.

En outre comme représenté sur la figure 10, on peut prévoir de placer certaines au moins des sources lumineuses 40 non pas dans des logements 52 entourant celles-ci sur 360°, mais dans des logements 59 débouchant sur la tranche de la pièce optique 50, voire sur l'extérieur de cette pièce optique 50. Dans ces différents cas les sources lumineuses 40 restent placer dans l'épaisseur de la pièce optique 50. Cette disposition permet de limiter l'échauffement de la pièce optique 50. Il est également avantageux dans ce cas d'associer la source lumineuse 40 à un réflecteur 90.

## Revendications

1. Système indicateur, notamment pour tableau de bord de véhicule automobile, comprenant :
- au moins une source lumineuse (40, 270) et
- des moyens optiques (250, 50, 220) qui servent à acheminer la lumière de la source lumineuse vers un élément indicateur, et
comprennent au moins un hologramme (230 ; 70, 72, 74, 76, 78, 80, 82, 84),
caractérise par le fait que l'élément indicateur comprend une aiguille indicatrice (200) comportant un index effilé (210) en matériau optiquement transparent, un moyeu (220) par lequel l'aiguille (200) peut être fixée sur l'axe de sortie d'un moyen d'entraînement et des moyens optiques prévus au niveau du moyeu (220) et adaptés pour renvoyer vers l'index (210) des rayons lumineux arrivant sur le moyeu (220) sensiblement parallèlement à l'axe (201), les moyens optiques prévus sur le moyeu (220) de l'aiguille (200) comprennant au moins un hologramme (230) qui couvre la majeure partie de la surface du moyeu (220) transversale à son axe (201).

2. Système selon la revendication 1, caractérisé par le fait que l'hologramme de l'aiguille (200) constitue un miroir holographique (230).

3. Système selon l'une des revendications 1 ou 2, caractérisé par le fait que l'hologramme (230) de l'aiguille (200) constitue un miroir holographique disposé sensiblement perpendiculairement à l'axe (201) du moyeu (220).

4. Système selon l'une des revendications 1 à 3, caractérisé par le fait que l'hologramme de l'aiguille (200) est formé d'une couche photosensible (230) disposée sur le moyeu (220).

5. Système selon l'une des revendications 1 à 3, caractérisé par le fait que l'hologramme (230) de l'aiguille (200) est un hologramme en relief généré sur le moyeu (220) de l'aiguille (200).

6. Système selon la revendication 5, caractérisé par le fait que l'hologramme en relief est réalisé par moulage ou pressage.

7. Système selon l'une des revendications 1 à 6, caractérisé par le fait qu'il comprend en outre des moyens optiques de correction placés à la base de l'index (210), au niveau de la jonction de celui-ci avec le moyeu (220).

8. Système selon la revendication 7, caractérisé par le fait que les moyens de correction comprennent une lentille holographique (240).

9. Système selon l'une des revendications 1 à 8, caractérisé par le fait que l'hologramme (230) de l'aiguille (200) comprend un dispositif holographique qui pour une part, dirige vers l'index (210) des rayons lumineux reçus avec une incidence sensiblement parallèle à l'axe (201) du moyeu et pour une autre part, diffuse certains de ces rayons reçus avec une incidence parallèle à l'axe (201) du moyeu, au niveau de ce dernier, afin d'obtenir un éclairage sensiblement homogène de l'aiguille (200) sur toute sa longueur.

10. Système selon l'une des revendications 1 à 9, caractérisé par le fait que les moyens optiques (250, 50, 220) comprennent en outre une pièce optique (250) adaptée pour diriger un faisceau lumineux sur la majeure partie de la surface du moyeu (220) transversale à son axe (201).

11. Système selon l'une des revendications 1 à 10, caractérisé par le fait que l'hologramme de l'aiguille (200) est placé dans l'une des dispositions suivantes :
- sur la face supérieure du moyeu (220),
- sur la face inférieure du moyeu (220),
- dans l'épaisseur du moyeu (220).

12. Système selon l'une des revendications 1 à 11, caractérisé par le fait que l'index (210) est formé d'une pièce séparée du moyeu (220) et que l'index (210) est guide à rotation autour de son axe longitudinal qui est transversal à l'axe du moyeu, sur le moyeu (220).

13. Système indicateur, selon l'une des revendications 1 à 12, caractérisé par le fait que les moyeus optiques (250, 50, 220)
comprennent au moins une pièce optique (50) qui sert de guide de lumière pour acheminer la lumière de la source vers un élément indicateur (22, 36), telle qu'une aiguille (36) ou une plage translucide (22) formée dans un cadran (20),
dans lequel ladite pièce optique (50) comprend en outre au moins un hologramme (70, 72, 74, 76, 78, 80, 82, 84).

14. Système selon la revendication 13, caractérisé par le fait que l'hologramme (70 à 84) de la pièce optique (50) est formé d'une couche photosensible déposée sur la pièce optique (50).

15. Système selon revendication 13, caractérisé par le fait que l'hologramme (70 à 84) de la pièce optique (50) est formé d'un hologramme en relief.

16. Système selon la revendication 15, caractérisé par le fait que l'hologramme de la pièce optique (50) en relief est réalisé par moulage ou pressage.

17. Système selon l'une des revendications 13 à 16, caractérisé par le fait que l'hologramme de la pièce optique (50) constitue un miroir holographique (70, 74, 76, 78, 80, 82).

18. Système selon l'une des revendications 13 à 16, caractérisé par le fait que l'hologramme de la pièce optique (50) constitue un diffuseur (70, 72), choisi de préférence dans le groupe comprenant les diffuseurs réflectifs et les diffuseurs transmissifs.

19. Système selon l'une des revendications 13 à 16, caractérisé par le fait que l'hologramme de la pièce optique (50) constitue une lentille holographique (84).

20. Système selon l'une des revendications 13 à 19, caractérisé par le fait que l'hologramme (72) de la pièce optique (50) est placé sur sa face avant (54).

21. Système selon l'une des revendications 13 à 20, caractérisé par le fait que l'hologramme (70, 80) de la pièce optique (50) est placé sur sa face arrière.

22. Système selon l'une des revendications 13 à 21, caractérisé par le fait que l'hologramme (78) de la pièce optique (50) est situé dans son épaisseur.

23. Système selon la revendication 22, caractérisé par le fait que l'hologramme (78) de la pièce optique (50) est incliné sur ses faces principales avant et arrière (54, 55).

24. Système selon l'une des revendications 13 à 23, caractérisé par le fait que l'hologramme (74, 76) de la pièce optique (50) est sur sa tranche.

25. Système selon la revendication 24, caractérisé par le fait que l'hologramme (74) de la pièce optique (50) est sur une facette de sa tranche orthogonale à ses faces principales avant et arrière (54, 55).

26. Système selon la revendication 24, caractérisé par le fait qu'il comprend deux hologrammes (760, 762) situés sur des facettes d'un prisme en toit formées sur la tranche de la pièce optique (50).

27. Système selon l'une des revendications 13 à 26, caractérisé par le fait que l'hologramme (70, 72) sur la pièce optique est adapté pour l'éclairage de plages translucides (22) formées dans un cadran (20).

28. Système selon l'une des revendications 13 à 27, caractérisé par le fait que l'hologramme (78, 80, 84) sur la pièce optique est adapte pour l'éclairage d'une aiguille (36).

29. Système selon l'une des revendications 13 à 28, caractérisé par le fait que la source lumineuse (40) est située dans l'épaisseur de la pièce optique (50).

30. Système selon l'une des revendications 13 à 29, caractérisé par le fait que la source lumineuse (40) est située sur l'arrière de la seconde pièce optique (50) en regard de structures à effet de prisme (56).

31. Système selon la revendication 30, caractérisé par le fait que les structures à effet de prisme comportent des hologrammes réflecteurs (82).

32. Système selon l'une des revendications 1 à 31, caractérisé par le fait qu'il comprend des moyens adaptés pour éviter une dispersion chromatique de la lumière par chaque hologramme (70 à 84).

33. Système selon la revendication 32, caractérisé par le fait qu'il comprend une double structure d'hologrammes superposée ou mis l'un à la suite de l'autre pour éviter la dispersion chromatique de la lumière.

34. Système selon la revendication 32, caractérisé par le fait que les sources lumineuses (40 ; 270) sont essentiellement monochromatiques, de préférence de type diodes électroluminescentes.

35. Système selon l'une des revendications 1 à 34, caractérisé par le fait que l'hologramme est obtenu par enregistrement optique des interférences entre un faisceau de référence et un faisceau objet ou par calcul sous forme d'un hologramme de synthèse.

36. Système selon l'une des revendications 1 à 35, caractérisé par le fait qu'il comprend au moins un hologramme formant un miroir ou une lentille holographique à puissance optique différente de 1.

## Claims

1. An indicator system, in particular for a motor vehicle dashboard, the system comprising:
• at least one light source (40, 270); and
• optical means (250, 50, 220) serving to convey the light from the light source to an indicator element, and including at least one hologram (230; 70, 72, 74, 76, 78, 80, 82, 84);
characterized by the fact that the indicator element comprises an indicator pointer (200) including a tapering index (210) of optically transparent material, a hub (220) enabling the pointer (200) to be fixed on the outlet shaft of drive means, and optical means provided at the hub (220) and adapted to reflect towards the index (210) light rays that reach the hub (220) substantially parallel to the axis (201) of the shaft, the optical means provided on the hub (220) of the pointer (200) comprising at least one hologram (230) which covers the major portion of the surface of the hub (220) transversely to its axis (201).

2. A system according to claim 1, characterized by the fact that the hologram of the pointer (200) constitutes a holographic mirror (230).

3. A system according to claim 1 or 2, characterized by the fact that the hologram (230) of the pointer (200) constitutes a holographic mirror disposed substantially perpendicularly to the axis (201) of the hub (220).

4. A system according to any one of claims 1 to 3, characterized by the fact that the hologram of the pointer (200) is in the form of a photosensitive layer (230) disposed on the hub (220).

5. A system according to any one of claims 1 to 3, characterized by the fact that the hologram (230) of the pointer (200) is a hologram in relief generated on the hub (220) of the pointer (200).

6. A system according to claim 5, characterized by the fact that the hologram in relief is made by molding or pressing.

7. A system according to any one of claims 1 to 6, characterized by the fact that it further includes optical corrector means placed at the base of the index (210) where it joins the hub (220).

8. A system according to claim 7, characterized by the fact that the corrector means comprise a holographic lens (240).

9. A system according to any one of claims 1 to 8, characterized by the fact that the hologram (230) of the pointer (200) comprises a holographic device which firstly directs towards the index (210) light rays received at an incidence substantially parallel to the axis (201) of the hub, and which secondly diffuses some of the rays received at an incidence parallel to the axis (201) of the hub at said hub in order to obtain substantially uniform lighting of the pointer (200) over its entire length.

10. A system according to any one of claims 1 to 9, characterized by the fact that the optical means (250, 50, 220) further comprise an optical piece (250) adapted to direct a light beam over the major portion of the surface of the hub (220) transversely to its axis (201).

11. A system according to any one of claims 1 to 10, characterized by the fact that the hologram of the pointer (200) is placed in one of the following dispositions:
• on the top face of the hub (220);
• on the bottom face of the hub (220); and
• in the thickness of the hub (220).

12. A system according to any one of claims 1 to 11, characterized by the fact that the index (210) is formed by a piece separate from the hub (220) and that the index (210) is guided to rotate on the hub (220) about its longitudinal axis which extends transversely relative to the axis of the hub.

13. An indicator system according to any one of claims 1 to 12, characterized by the fact that the optical means (250, 50, 220) comprise at least one optical part (50) which serves as a light guide for conveying light from the source towards an indicator element (22, 36) such as a pointer (36) or a translucent area (22) formed in a dial (20), wherein said optical piece (50) further comprises at least one hologram (70, 72, 74, 76, 78, 80, 82, 84).

14. A system according to claim 13, characterized by the fact that the hologram (70 to 84) of the optical piece (50) is formed by a photosensitive layer deposited on the optical piece (50).

15. A system according to claim 13, characterized by the fact that the hologram (70 to 84) of the optical piece (50) is formed by a hologram in relief.

16. A system according to claim 15, characterized by the fact that the hologram in relief of the optical piece is made by molding or pressing.

17. A system according to any one of claims 13 to 16, characterized by the fact that the hologram of the optical piece (50) is constituted by a holographic mirror (70, 74, 76, 78, 80, 82).

18. A system according to any one of claims 13 to 16, characterized by the fact that the hologram of the optical piece (50) constitutes a diffuser (70, 72) preferably selected from the group comprising reflective diffusers and transmissive diffusers.

19. A system according to any one of claims 13 to 16, characterized by the fact that the hologram of the optical piece (50) constitutes a holographic lens (84).

20. A system according to any one of claims 13 to 19, characterized by the fact that the hologram (72) of the optical piece (50) is placed on its front face (54).

21. A system according to any one of claims 13 to 20, characterized by the fact that the hologram (70, 80) of the optical piece (50) is placed on its back face.

22. A system according to any one of claims 13 to 21, characterized by the fact that the hologram (78) of the optical piece (50) is situated in the thickness thereof.

23. A system according to claim 22, characterized by the fact that the hologram (78) of the optical piece (50) is inclined on its main front and back faces (54, 55).

24. A system according to any one of claims 13 to 23, characterized by the fact that the hologram (74, 76) of the optical piece (50) is on its edge.

25. A system according to claim 24, characterized by the fact that the hologram (74) of the optical piece (50) is on a facet of its edge orthogonal to its front and back main faces (54, 55).

26. A system according to claim 24, characterized by the fact that it includes two holograms (760, 762) situated on facets of a roof-shaped prism formed on the edge of the optical piece (50).

27. A system according to any one of claims 13 to 26, characterized by the fact that the hologram (70, 72) on the optical piece (50) is adapted to light translucent areas (22) formed in a dial (20).

28. A system according to any one of claims 13 to 27, characterized by the fact that the hologram (78, 80, 84) on the optical piece (50) is adapted to light a pointer (36).

29. A system according to any one of claims 13 to 28, characterized by the fact that the light source (40) is situated in the thickness of the optical piece (50).

30. A system according to any one of claims 13 to 29, characterized by the fact that the light source (40) is situated behind the optical piece (50) facing prism-effect structures (56).

31. A system according to claim 30, characterized by the fact that the prism-effect structures including reflecting holograms (82).

32. A system according to any one of claims 1 to 31, characterized by the fact that it includes means adapted to avoid chromatic dispersion of light by each hologram (70 to 84).

33. A system according to claim 32, characterized by the fact that it includes a structure comprising a pair of holograms that are superposed or placed one after the other to avoid chromatic dispersion of light.

34. A system according to claim 32, characterized by the fact that the light sources (40; 270) are essentially monochromatic, preferably of the light emitting diode type.

35. A system according to any one of claims 1 to 34, characterized by the fact that the hologram is obtained by optically recording interference between a reference beam and an object beam or by computation in the form of a synthesized hologram.

36. A system according to any one of claims 1 to 35, characterized by the fact that it includes at least one hologram forming a mirror or a holographic lens having refractive power other than 1.

## Patentansprüche

1. Anzeigesystem, insbesondere für eine Instrumententafel eines Kraftfahrzeugs, mit
- mindestens einer Lichtquelle (40, 270) und
- optischen Mitteln (250, 50, 220), die dazu dienen, das Licht von der Lichtquelle zu einem Anzeigeelement zu führen und
mit mindestens einem Hologramm (230; 70, 72, 74, 76, 78, 80, 82, 84),
**dadurch gekennzeichnet**
daß das Anzeigeelement einen Zeiger (200) aufweist, der eine spitz zulaufende Zunge (210) aus optisch transparentem Material, eine Nabe (220), mittels welcher der Zeiger (200) auf einer Abtriebswelle eines Antriebsmittels befestigt werden kann, und optische Mittel umfaßt, die im Bereich der Nabe (220) vorgesehen sind und dazu ausgelegt sind, Lichtstrahlen, die im wesentlichen parallel zu der Achse (201) auf die Nabe (220) auftreffen, zu der Zunge (210) hin umzuleiten, wobei die auf der Nabe (220) des Zeigers (200) vorgesehenen optischen Mittel mindestens ein Hologramm (230) umfassen, das einen Großteil der transversal zu der Achse (201) der Nabe (220) verlaufenden Fläche der Nabe (220) bedeckt.

2. System nach Anspruch 1, dadurch gekennzeichnet, daß das Hologramm des Zeigers (200) ein holographischer Spiegel (230) ist.

3. System nach einem der Ansprüche 1 oder 2, dadurch gekennzeichnet, daß das Hologramm (230) des Zeigers (200) ein im wesentlichen senkrecht zu der Achse (201) der Nabe (220) angeordneter holographischer Spiegel ist.

4. System nach einem der Ansprüche 1 bis 3, dadurch gekennzeichnet, daß das Hologramm des Zeigers (200) aus einer auf der Nabe (220) angeordneten photoempfindlichen Schicht (230) gebildet ist.

5. System nach einem der Ansprüche 1 bis 3, dadurch gekennzeichnet, daß das Hologramm (230) des Zeigers (200) ein auf der Nabe (220) des Zeigers (200) erzeugtes Reliefhologramm ist.

6. System nach Anspruch 5, dadurch gekennzeichnet, daß das Reliefhologramm durch Gießen oder Pressen erzeugt ist.

7. System nach einem der Ansprüche 1 bis 6, dadurch gekennzeichnet, daß es des weiteren optische Korrekturmittel umfaßt, die an der Basis der Zunge (210) im Bereich deren Anschlusses an die Nabe (220) angeordnet sind.

8. System nach Anspruch 7, dadurch gekennzeichnet, daß die Korrekturmittel eine holographische Linse (240) umfassen.

9. System nach einem der Ansprüche 1 bis 8, dadurch gekennzeichnet, daß das Hologramm (230) des Zeigers (200) eine holographische Einrichtung umfaßt, die zum einen im wesentlichen parallel zu der Achse (201) der Nabe einfallend auftreffende Lichtstrahlen zu der Zunge (210) lenkt und zum anderen einige dieser parallel zu der Achse (201) der Nabe einfallend auftreffende Strahlen im Bereich der Nabe streut, um eine im wesentlichen homogene Beleuchtung des Zeigers (200) über dessen gesamte Länge zu erhalten.

10. System nach einem der Ansprüche 1 bis 9, dadurch gekennzeichnet, daß die optischen Mittel (250, 50, 220) des weiteren ein optisches Stück (250) aufweisen, das dazu ausgestaltet ist, ein Lichtstrahlenbündel auf den Großteil der transversal zu der Achse (201) der Nabe (220) verlaufenden Fläche der Nabe (220) zu lenken.

11. System nach einem der Ansprüche 1 bis 10, dadurch gekennzeichnet, daß das Hologramm des Zeigers (200) in einer der folgenden Anordnungen angebracht ist:
- auf der Außenfläche der Nabe (220),
- auf der Innenfläche der Nabe (220),
- in der Stärke der Nabe (220).

12. System nach einem der Ansprüche 1 bis 11, dadurch gekennzeichnet, daß die Zunge (210) aus einem von der Nabe (220) separaten Stück gebildet ist und daß die Zunge (210) um ihre Längsachse, die quer zu der Achse der Nabe verläuft, auf der Nabe (220) drehgeführt ist.

13. Anzeigesystem nach einem der Ansprüche 1 bis 12, dadurch gekennzeichnet, daß die optischen Mittel (250, 50, 220) mindestens ein optisches Stück (50) umfassen, das als Lichtleiter dient, um das Licht von der Quelle zu einem Anzeigeelement (22, 36), wie beispielsweise einem Zeiger (36) oder einem in einer Skalenscheibe (20) ausgebildeten lichtdurchlässigen Bereich (22), zu führen, wobei das optische Stück (50) des weiteren mindestens ein Hologramm (70, 72, 74, 76, 78, 80, 82, 84) aufweist.

14. System nach Anspruch 13, dadurch gekennzeichnet, daß das Hologramm (70 bis 84) des optischen Stücks (50) aus einer auf dem optischen Stück (50) aufgebrachten photoempfindlichen Schicht besteht.

15. System nach Anspruch 13, dadurch gekennzeichnet, daß das Hologramm (70 bis 84) des optischen Stücks (50) aus einem Reliefhologramm besteht.

16. System nach Anspruch 15, dadurch gekennzeichnet, daß das Reliefhologramm des optischen Stücks (50) durch Gießen oder Pressen hergestellt ist.

17. System nach einem der Ansprüche 13 bis 16, dadurch gekennzeichnet, daß das Hologramm des optischen Stücks (50) ein holographischer Spiegel (70, 74, 76, 78, 80, 82) ist.

18. System nach einem der Ansprüche 13 bis 16, dadurch gekennzeichnet, daß das Hologramm des optischen Stücks (50) ein Diffusor (70, 72) ist, der vorzugsweise aus der Gruppe der reflektierenden und der durchlsäsigen Diffusoren ausgewählt ist.

19. System nach einem der Ansprüche 13 bis 16, dadurch gekennzeichnet, daß das Hologramm des optischen Stücks (50) eine holographische Linse (84) ist.

20. System nach einem der Ansprüche 13 bis 19, dadurch gekennzeichnet, daß das Hologramm (72) des optischen Stücks (50) auf dessen Vorderseite (54) angeordnet ist.

21. System nach einem der Ansprüche 13 bis 20, dadurch gekennzeichnet, daß das Hologramm (70, 80) des optischen Stücks (50) auf dessen Rückseite angeordnet ist.

22. System nach einem der Ansprüche 13 bis 21, dadurch gekennzeichnet, daß das Hologramm (78) des optischen Stücks (50) in dessen Stärke angeordnet ist.

23. System nach Anspruch 22, dadurch gekennzeichnet, daß das Hologramm (78) des optischen Stücks (50) auf dessen vorderer und hinterer Hauptfläche (54, 55) geneigt ist.

24. System nach einem der Ansprüche 13 bis 23, dadurch gekennzeichnet, daß das Hologramm (74, 76) des optischen Stücks (50) auf dessen Rand angeordnet ist.

25. System nach Anspruch 24, dadurch gekennzeichnet, daß das Hologramm (74) des optischen Stücks (50) auf einer Schleifkante dessen Rands senkrecht zu dessen vorderer und hinterer Hauptseite (54, 55) angeordnet ist.

26. System nach Anspruch 24, dadurch gekennzeichnet, daß es zwei Hologramme (760, 762) umfaßt, die auf an dem Rand des optischen Stücks (50) ausgebildeten Schleifkanten eines Dachkantprismas angeordnet sind.

27. System nach einem der Ansprüche 13 bis 26, dadurch gekennzeichnet, daß das Hologramm (70, 72) auf dem optischen Stück zur Beleuchtung von in einer Skalenscheibe (20) ausgebildeten lichtdurchlässigen Bereich (22) ausgelegt ist.

28. System nach einem der Ansprüche 13 bis 27, dadurch gekennzeichnet, daß das Hologramm (78, 80, 84) auf dem optischen Stück zur Beleuchtung eines Zeigers (36) ausgelegt ist.

29. System nach einem der Ansprüche 13 bis 28, dadurch gekennzeichnet, daß die Lichtquelle (40) in der Stärke des optischen Stücks (50) angeordnet ist.

30. System nach einem der Ansprüche 13 bis 29, dadurch gekennzeichnet, daß die Lichtquelle (40) in Bezug auf die Strukturen (56) mit Prismeneffekt auf der Rückseite des zweiten optischen Stücks (50) angeordnet ist.

31. System nach Anspruch 30, dadurch gekennzeichnet, daß die Strukturen mit Prismeneffekt Reflexionshologramme (82) umfassen.

32. System nach einem der Ansprüche 1 bis 31, dadurch gekennzeichnet, daß es Mittel aufweist, die dazu ausgelegt sind, eine Farbzerlegung des Lichts durch das jeweilige Hologramm (70 bis 84) zu vermeiden.

33. System nach Anspruch 32, dadurch gekennzeichnet, daß es eine doppelte Struktur von übereinander- oder hintereinandergelegten Hologrammen zur Vermeidung einer Farbzerlegung des Lichts aufweist.

34. System nach Anspruch 32, dadurch gekennzeichnet, daß die Lichtquellen (40, 270) im wesentlichen monochromatisch und vorteilhafterweise vom Typ der Lumineszenzdioden sind.

35. System nach einem der Ansprüche 1 bis 34, dadurch gekennzeichnet, daß das Hologramm durch optische Aufnahme der Interferenzen zwischen einem Referenzstrahl und einem Objekstrahl oder durch Berechnung als synthetisches Hologramm hergestellt ist.

36. System nach einem der Ansprüche 1 bis 35, dadurch gekennzeichnet, daß es mindestens ein Hologramm umfaßt, das einen holographischen Spiegel oder eine holographische Linse mit einer von 1 verschiedenen Brechkraft darstellt.
